(19) Europäisches Patentamt
European Patent Office
Office européen des brevets

(11) **EP 2 251 393 A1**

(12) **EUROPEAN PATENT APPLICATION**
published in accordance with Art. 153(4) EPC

(43) Date of publication:
**17.11.2010 Bulletin 2010/46**

(51) Int Cl.:
**C09K 3/10** (2006.01)    **C08K 5/14** (2006.01)
**C08L 27/12** (2006.01)    **F16J 15/16** (2006.01)

(21) Application number: **08873244.1**

(22) Date of filing: **02.09.2008**

(86) International application number:
**PCT/JP2008/065736**

(87) International publication number:
**WO 2009/113193 (17.09.2009 Gazette 2009/38)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.03.2008 JP 2008060921**

(71) Applicant: **NOK Corporation**
**Minato-ku**
**Tokyo 105-8585 (JP)**

(72) Inventor: **HIROSE, Shiro**
**Fujisawa-shi**
**Kanagawa 251-0042 (JP)**

(74) Representative: **Gulde Hengelhaupt Ziebig & Schneider**
**Patentanwälte - Rechtsanwälte**
**Wallstrasse 58/59**
**10179 Berlin (DE)**

(54) **PROCESS FOR PRODUCING ROTATING/SLIDING SEAL AND ROTATING/SLIDING SEAL**

(57)    [Problem] To provide a method for producing a rotary shaft seal that exhibits improved eccentricity-conforming properties, in which each of the initial characteristics, i.e., a torque reduction (reduced friction) and sealing properties attributed to reduced oil leakage (oil pump rate when the seal member slides), can be improved, and degradation of these characteristics can be inhibited even after friction and abrasion; and the rotary shaft seal.

[Means for Solving the Problem] A method for producing a rotary shaft seal, comprising blending a peroxide crosslinking agent into a fluororubber polymer component comprising 95 to 40% by weight of a fluororubber terpolymer obtained by copolymerization with a perfluoroalkyl vinyl ether and 5 to 60% by weight of a liquid fluororubber polymer, to prepare a fluororubber composition, followed by crosslinking and molding the composition; and the rotary shaft seal.

Fig. 1

ATMOSPHERE SIDE        OIL SIDE

**Description**

<u>Technical Field</u>

The present invention relates to a method for producing a rotary shaft seal, and the rotary shaft seal; and more particularly, to a method for producing a rotary shaft seal having excellent eccentricity-conforming properties, and the rotary shaft seal.

<u>Background Art</u>

With the recent growing concern for environmental issues, there is a need to reduce the friction of various components with a view toward improving the fuel efficiency. The development of oil seals in view of friction reduction is also ongoing. Further, improvement in seal performance is also required as an improvement in the product function, necessitated by the trend toward being maintenance-free.

Oil seals using vinylidene fluoride fluororubber (FKM) as a base polymer in view of heat and oil resistance, etc., have been heretofore known (Patent Documents 1, 2, and 3).

Oil seals having low friction properties and sealing properties as initial characteristics have been proposed. Nevertheless, rotary shaft seals such as oil seals are subject to friction and abrasion; hence, it has been a great technical challenge to maintain the above-mentioned characteristics over a long period of time. More specifically, although various materials with reduced friction and abrasion properties have been proposed for fluororubber (FKM) components, these materials have had the following problems: it is difficult to ensure sufficient friction and sealing properties, and reduce the hardness of these materials; the eccentricity-conforming properties are poor; and the torque changes greatly after abrasion.

Patent Document 4 discloses a fluororubber composition with non-tackiness and low friction properties, obtained by blending 2 to 10 parts by weight of zinc oxide and 1 to 5 parts by weight of magnesium oxide as acid acceptors into 100 parts by weight of a ternary fluororubber. This ternary fluororubber is a polyol-crosslinkable fluororubber, and has a drawback in that it has poor eccentricity-conforming properties due to the use of the ternary fluororubber alone, and hence, cannot be used for rotary shaft seal applications.

Previously, the present inventor proposed in Patent Document 5 a technique in which a rubber composition with a hardness (durometer A) of 50 or less obtained by blending a peroxide-crosslinkable ternary fluororubber with a liquid fluororubber is used as seal materials requiring low-temperature property. The inventor further continued the research, and consequently found that a formulation of a peroxide-crosslinkable ternary fluororubber and a liquid fluororubber can provide a rotary shaft seal that exhibits improved eccentricity-conforming properties, in which each of the initial characteristics, i.e., a torque reduction (reduced friction) and sealing properties attributed to reduced oil leakage (oil pump rate when the seal member slides), can be improved, and degradation of these characteristics can be inhibited even after friction and abrasion. The invention has been accomplished based on this finding.

Patent Document 1: Japanese Unexamined Patent Publication No. 9-143327
Patent Document 2: Japanese Unexamined Patent Publication No. 8-151565
Patent Document 3: Japanese Unexamined Patent Publication No. 3-66714
Patent Document 4: Japanese Unexamined Patent Publication No. 2007-284608
Patent Document 5: Japanese Unexamined Patent Publication No 2004-250520

<u>Disclosure of the Invention</u>

<u>Problems to be Solved by the Invention</u>

An object of the invention is to provide a method for producing a rotary shaft seal that exhibits improved eccentricity-conforming properties, in which each of the initial characteristics, i.e., a torque reduction (reduced friction) and sealing properties attributed to reduced oil leakage (oil pump rate when the seal member slides), can be improved, and degradation of these characteristics can be inhibited even after friction and abrasion; and the rotary shaft seal.

Other objects of the invention will become apparent from the following description.

<u>Means for Solving the Problems</u>

The above-mentioned object is solved by the inventions set forth below.

The invention as defined in claim 1 is a method for producing a rotary shaft seal, comprising blending a peroxide crosslinking agent into a fluororubber polymer component comprising 95 to 40% by weight of a fluororubber terpolymer obtained by copolymerization with a perfluoroalkyl vinyl ether and 5 to 60% by weight of a liquid fluororubber polymer, to prepare a fluororubber composition, followed by crosslinking and molding the composition.

The invention as defined in claim 2 is the method according to claim 1, wherein the fluororubber polymer component comprises 80 to 50% by weight of a fluororubber terpolymer obtained by copolymerization with a perfluoroalkyl vinyl ether and 20 to 50% by weight of a liquid fluororubber polymer.

The invention as defined in claim 3 is the method according to claim 1 or 2, wherein the peroxide crosslinking agent is used as an active ingredient in an amount of 0.5 to 10 parts by weight per 100 parts by weight of the fluororubber polymer component.

The invention as defined in claim 4 is a rotary shaft seal obtained by the method of any one of claims 1 to 3.

The invention as defined in claim 5 is the rotary shaft seal according to claim 4, wherein a TR-10 value is - 20°C or less,

the TR-10 value being measured by the following method: in accordance with JIS K6261, using a TR tester, a sample of the rotary shaft seal is elongated 50%, the temperature is lowered, and the sample is vitrified at a glass transition point (Tg) or lower; subsequently, the temperature is gradually increased to alleviate distortion of the sample, and the temperature at which the sample has recovered 10% based on its initial elongation is determined as the TR-10 value.

Effects of the Invention

In accordance with the invention, there are provided a method for producing a rotary shaft seal that exhibits improved eccentricity-conforming properties, in which each of the initial characteristics, i.e., a torque reduction (reduced friction) and sealing properties attributed to reduced oil leakage (oil pump rate when the seal member slides), can be improved, and degradation of these characteristics can be inhibited even after friction and abrasion; and the rotary shaft seal.

Brier Description of the Drawing

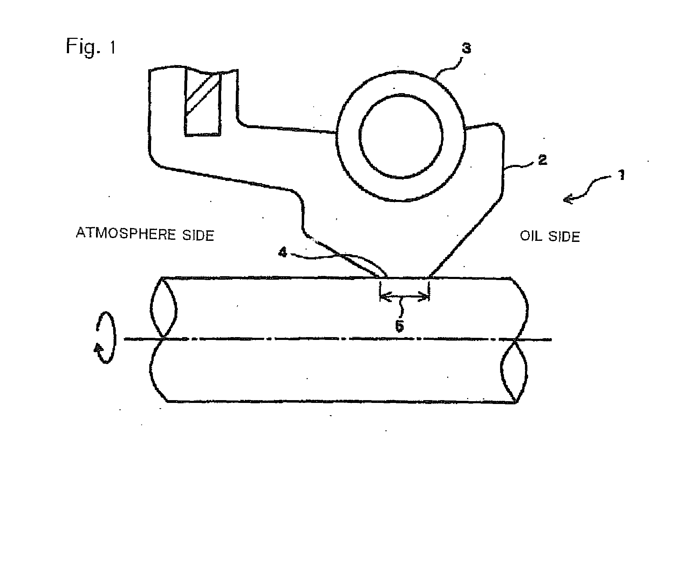

Fig. 1 is a diagram showing the rotary shaft seal of the invention as appropriately installed.

Explanation of Reference Numerals

1:  rotary shaft seal
2:  seal lip portion
3:  garter spring
4:  oil film
5:  contact width

Best Mode for Carrying Out the Invention

Embodiments of the invention are described below.

<Method for Producing a Rotary shaft Seal>

The method for producing a rotary shaft seal of the invention includes blending a peroxide crosslinking agent into a fluororubber polymer component comprising 95 to 40% by weight of a fluororubber terpolymer obtained by copolymerization with a perfluoroalkyl vinyl ether and 5 to 60% by weight of a liquid fluororubber polymer, to prepare a fluororubber composition, followed by crosslinking and molding the composition.

The fluororubber terpolymer obtained by copolymerization with a perfluoroalkyl vinyl ether (hereinafter referred to as the fluororubber terpolymer of the invention) is a ternary copolymer of a perfluoroalkyl vinyl ether and one or more fluorine-containing olefins (including a polymer or a copolymer), and is of the type that is crosslinkable with a peroxide.

Examples of fluorine-containing olefins include vinylidene fluoride, hexafluoropropylene, pentafluoropropylene, trifluoroethylene, trifluorochloroethylene, tetrafluoroethylene, vinyl fluoride, perfluoroacrylate, and perfluoroalkyl acrylate.

An example of the fluororubber terpolymer of the invention is vinylidene fluoride/hexafluoropropylene/perfluoroalkyl vinyl ether fluororubber terpolymer (abbr.: VdF/TFE/PMVE) of the type that is crosslinkable with a peroxide.

These polymers can be obtained by solution polymerization, suspension polymerization, or emulsion polymerization according to a known method, and are commercially available (e.g., the GLT-type and GFLT-type by Du Pont).

Examples of liquid fluororubber polymers include vinylidene fluoride/hexafluoropropylene copolymer, vinylidene fluoride/hexafluoropropylene/tetrafluoroethylene copolymer, and perfluoropropylene oxide copolymer. To achieve the objects of the invention, the liquid fluororubber polymer has a viscosity (at 100°C) of preferably about 400 to 4,000 cps, and more preferably about 500 to 3,000 cps.

The liquid fluororubber polymer of the invention can be obtained by solution polymerization, suspension polymerization, or emulsion polymerization according to a known method, and is commercially available (e.g., Diel G-101 by Daikin Industries, Ltd., SIFEL Series by Shin-Etsu Chemical Co., Ltd., and Viton LM by Du Pont).

The proportion of the fluororubber terpolymer of the invention and the liquid fluororubber polymer in the fluororubber polymer component is 5 to 60% by weight of the liquid fluororubber polymer per 95 to 40% by weight of the fluororubber terpolymer of the invention, and preferably 20 to 50% by weight of the liquid fluororubber polymer per 80 to 50% by weight of the fluororubber terpolymer of the invention (the total weight amount of the fluororubber polymer component is 100% by weight).

If the proportion of the liquid fluororubber polymer is less than 5% by weight, the eccentricity-conforming properties cannot be improved, making the resulting product unsuitable for use as a rotary shaft seal. Further, if the proportion of the liquid fluororubber polymer exceeds 60% by weight, the moldability will deteriorate, causing adhesion to a mold, etc.

Organic peroxide crosslinking agents can be preferably used as the peroxide crosslinking agent. Examples of organic peroxide crosslinking agents include 2,5-dimethylhexane-2,5-dihydroperoxide;

2,5-dimethyl-2,5-di(benzoylperoxy)hexane;

tert-butyl peroxide; dicumyl peroxide;

tert-butyl cumyl peroxide;

1,1-di(tert-butylperoxy)-3,3,5-trimethylcyclohexane;

2,5-dimethyl-2,5-di(tert-butylperoxy)hexane;

2,5-dimethyl-2,5-di(tert-butylperoxy)hexyne-3;

1,3-di(tert-butylperoxyisopropyl)benzene;

tert-butyl peroxybenzoate;

tert-butylperoxy isopropyl carbonate; and

n-butyl-4,4-di(tert-butylperoxy)valerate. These crosslinking agents may be used alone or in a combination.

In the invention, commercially available products (e.g., Perhexa 25B-40 by NOF Corporation) as purchased can be used as the crosslinking agent.

Moreover, a commercially available masterbatch containing a rubber raw material component and a crosslinking agent can be used as the peroxide crosslinking agent.

The content of the peroxide crosslinking agent as an active ingredient is preferably 0.5 to 10 parts by weight per 100 parts by weight of the fluororubber polymer component. Within this range, the resulting crosslinked product, i.e., the rotary shaft seal, will exhibit improved low-temperature property while exhibiting reduced friction, and having improved eccentricity-conforming properties.

Examples of crosslinking accelerators (crosslinking aids) usable in the peroxide crosslinking system include metal oxides such as zinc oxide; and triallyl isocyanurate. Additionally, triethanolamine, diethylene glycol, and the like can be used when a fatty acid such as stearic acid, or a silica reinforcing agent is used.

The content of the crosslinking accelerator is preferably 0.1 to 10 parts by weight, and more preferably 0.2 to 5 parts by weight, per 100 parts by weight of the fluororubber polymer component.

In the invention, in addition to the above-mentioned ingredients, rubber compounding ingredients generally used in the rubber industry can be added within a range such that the effects of the crosslinking agent and crosslinking accelerator used in the invention are not impaired. Examples of such ingredients include reinforcing agents such as carbon black, carbon fiber, etc.; fillers such as hydrotalcite ($Mg_6Al_2(OH)_{16}CO_3$), calcium carbonate, magnesium carbonate, aluminium hydroxide, magnesium hydroxide, aluminium silicate, magnesium silicate, calcium silicate, potassium titanate, titanium oxide, barium sulfate, aluminum borate, glass fiber, aramid fiber, diatomaceous earth, wollastonite, etc.; processing aids such as waxes, metal soaps, carnauba wax, etc.; acid acceptors such as calcium hydroxide, magnesium oxide, zinc oxide, etc; antioxidants; thermoplastic resins; clay; and other fibrous fillers.

Among the above, calcium hydroxide can be preferably used to suitably adjust the crosslinking density, and is preferable to reduce the friction coefficient of the crosslinked fluororubber product, or achieve low rebound resilience of the crosslinked fluororuber product. Further, calcium hydroxide is desirable in that foaming does not easily occur during molding. Magnesium oxide can also be preferably used to achieve low rebound resilience of the crosslinked fluororubber product, or achieve low friction coefficient and low tackiness of the crosslinked fluororubber product.

The fluororubber composition can be prepared by, for example, a method in which predetermined amounts of the above-mentioned ingredients are kneaded in an enclosed mixing machine, such as an internal mixer, a kneader, a Banbury mixer, or a general kneading machine for rubber, such as an open roll mill; or by a method in which the above-mentioned ingredients are dissolved in a solvent or the like, and dispersed with a stirrer or the like.

The thus-prepared fluororubber composition is pressurized, heated, and crosslinked (vulcanized), and the crosslinked product (vulcanizate) is molded, thereby giving a rotary shaft seal.

Specifically, the thus-prepared fluororubber composition is heated for about 1 to 120 minutes typically at a temperature of 140 to 230°C (primary crosslinking (vulcanization)), using an injection molding machine, a compression-molding machine, a vulcanizing press machine, an oven, or the like, and is thereby crosslinked (vulcanized) to mold a crosslinked fluororubber product (vulcanizate), which is the rotary shaft seal.

The primary crosslinking (vulcanization) is a process of crosslinking the fluororubber composition to such a degree that its shape can be maintained to form (preform) a certain shape. In the case of a complicated shape, the composition can be molded in a mold. Primary crosslinking (vulcanization) can also be performed in an oven, such as an air heater or the like.

In the invention, secondary crosslinking (vulcanization) can also be performed, as required. When secondary vulcanization is performed, it may be performed according to a general method, but is preferably performed by, for example, 1 to 20 hours of heat treatment at 200 to 300°C.

<Rotary shaft Seal>

The thus-produced rotary shaft seal of the invention has the following characteristics.

Firstly, the rotary shaft seal of the invention exhibits an excellent low-temperature property. Specifically, the rotary shaft seal has a TR-10 value (low-temperature property) of -20°C or less, and preferably -25°C or less, as measured by the following measurement method.

The method for measuring the TR-10 value is as follows: in accordance with JIS K6261, using a TR tester, a sample of the rotary shaft seal is elongated 50%, the temperature is lowered, and the sample is vitrified at a glass transition point (Tg) or lower; subsequently, the temperature is gradually increased to alleviate distortion of the sample, and the temperature at which the sample has recovered 10% based on its initial elongation is determined as the TR-10 value.

Secondly, the rotary shaft seal of the invention exhibits a low torque increase. Specifically, the rotary shaft seal has a torque increase of 45% or less, and preferably 41% or less, as measured by the following measurement method and calculation method.

The method for measuring torque and the method for calculating the torque increase are as follows: a new rotary shaft seal molded into an inner diameter of 85 mm, an outer diameter of 105 mm, and a width of 13 mm, and an abraded rotary shaft seal prepared by winding sandpaper around the rotation shaft, and abrading away the seal lip of the rotary shaft seal to an amount of abrasion of 300 $\mu$m, were each set in a rotation tester. With a lubricant being sealed in the shaft center, a rotation test was conducted at 100°C and 2,000 rpm. The torque of each of the seals during the rotation test was measured with a load cell attached to each of the rotary shaft seals, and the torque increase was determined according to the following equation.

```
Torque increase = (sliding torque of the abraded seal

- sliding torque of the new seal) / sliding torque of the

new seal
```

Thirdly, the rotary shaft seal of the invention exhibits an excellent pump rate (oil suction amount). Specifically, the rotary shaft seal has a decrease in pump rate of 37% or less, and preferably 35% or less, as measured by the following measurement method.

The method for measuring the pump rate (oil suction amount) and the method for calculating the decrease in pump rate are as follows: a new rotary shaft seal molded into an inner diameter of 85 mm, an outer diameter of 105 mm, and a width of 13 mm, and an abraded rotary shaft seal prepared by winding sandpaper around the rotation shaft, and abrading away the seal lip of the rotary shaft seal to an amount of abrasion of 300 $\mu$m, are each set in a rotation tester. With a lubricant being sealed in the shaft center, a rotation test is conducted at 100°C and 2,000 rpm. A certain amount of oil is fed to the seal lip portion of each of the new and abraded rotary shaft seals, and the time required from the feeding of the oil to the completion of suction is measured. The pump rate of each of the new and abraded seals is determined according to the equation: pump rate Q [cc/hr] = amount of oil fed [g] / density of oil [g/cc] / (time required for suction [sec] x 3,600), and a decrease in the pump rate is determined according to the following equation:

```
Decrease in pump rate = -(pump rate of the abraded seal - pump rate of the new seal) / pump rate of the new seal
```

Fourthly, the rotary shaft seal of the invention exhibits excellent eccentricity-conforming properties. Specifically, the ratio of the shaft eccentricity at which oil leakage occurs relative to the interference (oil leakage eccentricity / interference), as determined by the following method, is 0.45 or more, and preferably 0.60 or more.

The rotary shaft seal is placed in a rotation tester in which the shaft is eccentric to a given degree (the interference of the seal lip when the shaft is not eccentric is 1 mm). A rotation test is conducted at 100°C and 2,000 rpm, and the shaft eccentricity of the rotation tester is gradually increased. The shaft eccentricity at which oil leakage occurs is then determined according to the equation: the ratio of the shaft eccentricity = oil leakage eccentricity / interference.

<u>Examples</u>

The invention will be described with reference to Examples; however, the invention is not limited to these Examples.

Example 1

<Compounding Ingredients and Amounts Thereof>

1. Fluororubber polymer component:

- Vinylidene fluoride/hexafluoropropylene/perfluoroalkyl vinyl ether fluororubber terpolymer (peroxide-crosslinkable);
  ("Viton GLT-600S" by DuPont Dow Elastomers)
  ... 80 parts by weight
- Liquid fluororubber polymer:
  ("Diel G-101" by Daikin Industries, Ltd.)
  ... 20 parts by weight

2. Fillers:

- Diatomaceous earth ("RADIOLITE #3000" by Hayashi-kasei., Co., Ltd.)
  ... 15 parts by weight
- Wollastonite ("NYAD400" by NYCO; aspect ratio: 5)
  ... 35 parts by weight

3. Carbon black: ("N990" by Cancarb)
... 2 parts by weight
4. Processing aid: carnauba wax (melting point: 860°C)
("VPA No. 2" by Dupont Dow Elastomers)
... 2 parts by weight
5. Crosslinking components:

- Peroxide crosslinking agent:

  2,5-dimethylhexane-2,5-dihydroperoxide ("Perhexa 25B-40" by NOF Corporation) ... 2 parts by weight
  • Crosslinking aid: triallyl isocyanurate:
  ("TAIC WH60" by Nippon Kasei Chemical Co., Ltd.)
  ... 2 parts by weight

6. Acid acceptors:

- Calcium hydroxide ("Caldic #2000" by Ohmi Chemical Industry, Co., Ltd.) ... 3 parts by weight
- Magnesium oxide ("MgO #150" by Kyowa Chemical Industry, Co., Ltd.) ... 6 parts by weight

<Preparation and Molding of Crosslinked Product>

The above-listed compounding ingredients (except for the crosslinking components) were thrown into a kneader and kneaded for 20 minutes, and the crosslinking components were subsequently thrown into an open roll mill, thereby preparing a composition.

The resulting composition was pressurized and vulcanized at 170°C for 20 minutes to mold the rotary shaft seal (crosslinked product) of the invention.

<Evaluation Method>

1. Normal Physical Properties

The above composition (except for the crosslinking components) was used to prepare unvulcanized rubber sheets with a thickness of 2 mm, using a 6-inch mixing roll. The unvulcanized rubber sheets were press-cured for 60 minutes at 180°C, and subsequently oven-cured for 24 hours at 200°C, thereby producing sheet-like rubber test pieces for evaluation of normal physical properties.

These rubber test pieces were evaluated for their rubber hardness Hs, tensile strength Tb (MPa), and elongation Eb (%) according to the following methods. Table 1 shows the evaluation results.

Rubber hardness Hs was measured according to JIS K6253, using a type A durometer.

Tensile strength Tb (MPa) was measured according to JIS K6251.

Elongation Eb (%) was measured according to JIS K6251 (measured at $23\pm3$°C).

2. Product Evaluation of Rotary Shaft Seal

(1) Low-Temperature Property [TR-10 Value]

In accordance with JIS K6261, using a TR tester, a sample of the rotary shaft seal was elongated 50%, the temperature was lowered, and the sample was vitrified at a glass transition point (Tg) or lower; subsequently, the temperature was gradually increased to alleviate distortion of the sample, and the temperature at which the sample had recovered 10% based on its initial elongation was determined as the TR-10 value. The result is shown in Table 1.

(2) Torque Increase

The torque increase was determined by the following method. The result is shown in Table 1.

A new rotary shaft seal molded into an inner diameter of 85 mm, an outer diameter of 105 mm, and a width of 13 mm, and an abraded rotary shaft seal prepared by winding sandpaper around the rotation shaft, and abrading away the seal lip of the rotary shaft seal to an amount of abrasion of 300 $\mu$m, were each set in a rotation tester. With a lubricant (Toyota pure castle oil SM 10W-30) being sealed in the shaft center, a rotation test was conducted at 100°C and 2,000 rpm. The torque of each of the seals during the rotation test was measured with a load cell attached to each of the rotary shaft seals, and the torque increase was determined according to the following equation:

```
    Torque increase = (sliding torque of the abraded seal

  - sliding torque of the new seal) / sliding torque of the new seal
```

(3) Decrease in Pump Rate

The decrease in pump rate was determined by the following measurement method. The result is shown in Table 1.
A new rotary shaft seal molded into an inner diameter of 85 mm, an outer diameter of 105 mm, and a width of 13 mm, and an abraded rotary shaft seal prepared by winding sandpaper around the rotation shaft, and abrading away the seal lip of the rotary shaft seal to an amount of abrasion of 300 μm, were each set in a rotation tester. With a lubricant (Toyota pure castle oil SM 10W-30) being sealed in the shaft center, a rotation test was conducted at 100°C and 2,000 rpm. A certain amount of oil was fed to the seal lip portion of each of the new and abraded rotary shaft seals, and the time required from the feeding of the oil to the completion of suction was measured.

Specifically, as shown in Fig. 1, a certain amount of oil was fed with a syringe or the like to the seal lip portion 2 of the rotary shaft seal 1 appropriately installed (the state in which to suck oil into the lip), and the time required from the feeding of the oil to the completion of suction was measured (n = 3) and determined according to the equation below. In Fig. 1, reference numeral 3 denotes a garter spring, reference numeral 4 denotes an oil film, and reference numeral 5 denotes the contact width.

The pump rate (oil suction amount) of each of the new and abraded seals was determined according to the equation: pump rate Q [cc/hr] = amount of oil fed [g] / density of oil [g/cc] / (time required for suction [sec] x 3,600), and a decrease in the pump rate was determined according to the following equation:

$$\text{Decrease in pump rate} = -(\text{pump rate of the abraded seal} - \text{pump rate of the new seal}) / \text{pump rate of the new seal}$$

(4) Eccentricity-Conforming Properties

A sample of the rotary shaft seal was placed in a rotation tester in which the shaft was eccentric to a given degree (the interference of the seal lip when the shaft was not eccentric was 1 mm). A rotation test was conducted at 100°C and 2,000 rpm, and the presence or absence of oil leakage was visually inspected. The shaft eccentricity of the rotation tester was gradually increased, and the shaft eccentricity at which oil leakage occurred was determined.

Evaluation Criteria

The sample was evaluated for its eccentricity-conforming properties according to the following evaluation criteria. The result is shown in Table 1.

The evaluation was made as follows. The ratio of the shaft eccentricity at which oil leakage occurred relative to the interference (oil leakage eccentricity / interference) was determined. A ratio of 0.60 or more was evaluated as A, a ratio of 0.45 to less than 0.60 was evaluated as B, a ratio of 0.30 to less than 0.45 was evaluated as C, and a ratio of less than 0.30 was evaluated as D.

Example 2

A rotary shaft seal was prepared in the same manner as in Example 1, except that the amount of each of the peroxide crosslinking agent and crosslinking aid was increased to 2.5 parts by weight to increase the crosslinking density, and the sample was similarly evaluated. The results are shown in Table 1.

Example 3

A rotary shaft seal was prepared in the same manner as in Example 1, except that the proportion of the fluororubber terpolymer and liquid fluororubber polymer was changed as shown in Table 1, and the sample was similarly evaluated. The results are shown in Table 1.

Example 4

A rotary shaft seal was prepared in the same manner as in Example 1, except that the proportion of the fluororubber terpolymer and liquid fluororubber polymer was changed as shown in Table 1, and the amount of each of the peroxide crosslinking agent and crosslinking aid was increased to 3.6 parts by weight to increase the crosslinking density, and the sample was similarly evaluated. The results are shown in Table 1.

Comparative Example 1

A rotary shaft seal was prepared in the same manner as in Example 1, except that a fluororubber bipolymer of the following composition was used alone, and the following crosslinking agent and crosslinking aid were used instead of those used in Example 1, and the sample was similarly evaluated. The results are shown in Table 1.

1. Fluororubber bipolymer:

• Vinylidene fluoride/hexafluoropropylene fluororubber biopolymer; ("Viton A500" by Dupont Dow Elastomers; polyol-crosslinkable, Mooney viscosity $ML_{1+10}$ (121°C) 45) ... 100 parts by weight

2. Crosslinking components:

• Bisphenol AF
("Curative VC#30" by Dupont Dow Elastomers; a masterbatch with a 50% dihydroxy aromatic compound content and a 50% Viton E45 content) ... 2.5 parts by weight
• Crosslinking accelerator:
("Curative VC#20" by Dupont Dow Elastomers; a masterbatch with a 33% organic phosphonium salt content and a 67% Viton E45 content) ... 1.2 parts by weight

Comparative Example 2

A rotary shaft seal was prepared in the same manner as in Example 1, except that the liquid fluororubber polymer in the fluororubber polymer component was not used, and the amount of the fluororubber terpolymer was increased to 100 parts by weight, and the sample was similarly evaluated. The results are shown in Table 1.

Comparative Example 3

A rotary shaft seal was prepared in the same manner as in Example 1, except that the proportion of the fluororubber terpolymer and liquid fluororubber polymer in the fluororubber polymer component was changed as shown in Table 1, and the sample was similarly evaluated. The results are shown in Table 1.

Comparative Example 4

A rotary shaft seal was prepared in the same manner as in Example 1, except that the proportion of the fluororubber terpolymer and liquid fluororubber polymer in the fluororubber polymer component was changed as shown in Table 1, and the amount of each of the peroxide crosslinking agent and crosslinking aid was increased to 3.6 parts by weight to increase the crosslinking density, and the sample was similarly evaluated. The results are shown in Table 1.
[Table 1]

| | | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|---|
| Polymer | Viton A500 | | | | | 100 | | | |
| | GLT-600S | 80 | 80 | 60 | 60 | | 100 | 97 | 30 |
| | Diel G101 | 20 | 20 | 40 | 40 | | | 3 | 70 |
| Filler | RADIOLITE #3000 | 15 | 15 | 15 | 15 | 15 | 15 | 15 | 15 |
| | NYAD400 | 35 | 35 | 35 | 35 | 35 | 35 | 35 | 35 |
| Carbon Black | N990 | 2 | 2 | 2 | 2 | 2 | 2 | 2 | 2 |

(continued)

| | | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|---|
| Processing Aid | VPA No.2 | 2 | 2 | 2 | 2 | 2 | 2 | 2 | 2 |
| Crosslinking Component Crosslinking Agent | Curative VC#30 | | | | | 2.5 | | | |
| | Curative VC#20 | | | | | 1.2 | | | |
| | TAIC WH60 | 2 | 2.5 | 2 | 3.6 | | 2 | 2 | 3.6 |
| | Perhexa 25B-40 | 2 | 2.5 | 2 | 3.6 | | 2 | 2 | 3.6 |
| Acid Acceptor | Caldic #2000 | 3 | 3 | 3 | 3 | 3 | 3 | 3 | 3 |
| | MgO #150 | 6 | 6 | 6 | 6 | 6 | 6 | 6 | 6 |
| Total | | 167.0 | 168.0 | 167.0 | 170.2 | 166.7 | 167.0 | 167.0 | 170.2 |
| Normal Physical Values | Hs (Durometer A) | 80 | 82 | 74 | 80 | 81 | 83 | 83 | Not Moldable Due to Adhesion to the Mold |
| | TB (MPa) | 8.26 | 8.33 | 5.31 | 7.98 | 13.4 | 8.34 | 8.31 | |
| | EB (%) | 340 | 300 | 290 | 310 | 180 | 260 | 280 | |
| Low-Temperature Property | TR-10 (°C) | -29.3 | -29.2 | -29.3 | -29.3 | -17 | -29.9 | -29.8 | |
| Torque (N.cm) 2,000 rpm | New Seal | 43.5 | 44.8 | 29.4 | 38.4 | 31.0 | 50.8 | 48.4 | Unmeasurable |
| | Abraded Seal | 58.2 | 62.9 | 33.9 | 47.2 | 58.3 | 64.1 | 64.0 | |
| | Torque Increase (%) | 33.8 | 40.4 | 15.3 | 22.9 | 88.0 | 26.2 | 32.2 | |
| Q(cc/)h) 2,000 rpm | New Seal | 68.2 | 53.1 | 65.9 | 57.2 | 37.6 | 58.2 | 59.6 | |
| | Abraded Seal | 44.8 | 51.0 | 55.6 | 53.6 | 58.1 | 35.6 | 36.2 | |
| | Decrease (%) in Pump Rate | 34.3 | 4.0 | 15.6 | 6.3 | -54.5 | 38.8 | 39.3 | |
| Eccentricity-Conforming Properties | | B | B | A | A | B | C | C | |

**Claims**

1. A method for producing a rotary shaft seal, comprising blending a peroxide crosslinking agent into a fluororubber polymer component comprising 95 to 40% by weight of a fluororubber terpolymer obtained by copolymerization with a perfluoroalkyl vinyl ether and 5 to 60% by weight of a liquid fluororubber polymer, to prepare a fluororubber composition, followed by crosslinking and molding the composition.

2. The method according to claim 1, wherein the fluororubber polymer component comprises 80 to 50% by weight of a fluororubber terpolymer obtained by copolymerization with a perfluoroalkyl vinyl ether and 20 to 50% by weight of a liquid fluororubber polymer.

3. The method according to claim 1 or 2, wherein the peroxide crosslinking agent is used as an active ingredient in an amount of 0.5 to 10 parts by weight per 100 parts by weight of the fluororubber polymer component.

4. A rotary shaft seal obtained by the method of any one of claims 1 to 3.

5. The rotary shaft seal according to claim 4, wherein a TR-10 value is -20°C or less,
the TR-10 value being measured by the following method: in accordance with JIS K6261, using a TR tester, a sample of the rotary shaft seal is elongated 50%, the temperature is lowered, and the sample is vitrified at a glass transition point (Tg) or lower; subsequently, the temperature is gradually increased to alleviate distortion of the sample, and the temperature at which the sample has recovered 10% based on its initial elongation is determined as the TR-10 value.

Fig. 1

ATMOSPHERE SIDE

OIL SIDE

<table>
<tr><td colspan="2" align="center">**INTERNATIONAL SEARCH REPORT**</td><td>International application No.</td></tr>
<tr><td colspan="2"></td><td>PCT/JP2008/065736</td></tr>
</table>

A.   CLASSIFICATION OF SUBJECT MATTER
*C09K3/10*(2006.01)i, *C08K5/14*(2006.01)i, *C08L27/12*(2006.01)i, *F16J15/16*
(2006.01)i

According to International Patent Classification (IPC) or to both national classification and IPC

B.   FIELDS SEARCHED

Minimum documentation searched (classification system followed by classification symbols)
C09K3/10, C08K5/14, C08L27/12, F16J15/16

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2004-307765 A (Gomunoinaki Co., Ltd.), 04 November, 2004 (04.11.04), Claims 1, 2, 8, 9; Par. Nos. [0020], [0051]; examples 1 to 6 (Family: none) | 1-5 |
| Y | JP 2004-250520 A (NOK Corp.), 09 September, 2004 (09.09.04), Claims 1, 5, 9, 10; Par. No. [0020]; examples 1 to 7 & US 2004/162380 A1 | 1-5 |

☒   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 December, 2008 (01.12.08) | 09 December, 2008 (09.12.08) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2008/065736

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-099895 A  (Freudenberg-Nok General Partnership), 02 April, 2004 (02.04.04), Claims 1, 2, 5, 30, 35, 36; examples 1 to 2 & US 2004/048983 A1    & CA 2435556 A1 & EP 1400563 A1       & KR 2004023783 A & BR 200303479 A      & CN 1513907 A & MX 2003007739 A1 | 1-5 |
| Y | JP 2003-013042 A  (Mitsubishi Cable Industries, Ltd.), 15 January, 2003 (15.01.03), Claims 1, 2, 4; Par. Nos. [0002], [0019]; examples 2 to 3 (Family: none) | 1-5 |
| A | WO 2005/073304 A1  (3M INNOVATIVE PROPERTIES CO.), 11 August, 2005 (11.08.05), & US 2005/159557 A1     & EP 1709113 A1 & JP 2007-517964 A      & KR 2007004625 A & CN 1984947 A | 1-5 |
| A | JP 2005-146099 A  (UNIMATEC CO., LTD.), 09 June, 2005 (09.06.05), (Family: none) | 1-5 |
| A | JP 2003-119455 A  (Mitsubishi Cable Industries, Ltd.), 23 April, 2003 (23.04.03), (Family: none) | 1-5 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9143327 A
- JP 8151565 A
- JP 3066714 A
- JP 2007284608 A
- JP 2004250520 A